# EUROPEAN PATENT SPECIFICATION

(11) **EP 3 914 739 B1**
(45) Date of publication and mention of the grant of the patent: **16.09.2026**
(21) Application number: 20703075.0
(22) Date of filing: 21.01.2020
(51) Int. Cl.: C22B 1/00, C22B 3/16, C22B 3/22, C22B 3/44, C22B 7/00, C22B 3/00, H01M 4/57, H01M 10/06, H01M 10/54, H01M 4/16

(54) **RECYCLING OF LEAD-CONTAINING WASTE**
RECYCLING VON BLEIHALTIGEN ABFÄLLEN
RECYCLAGE DE DÉCHETS CONTENANT DU PLOMB

(30) Priority: 21.01.2019 GB 201900833
(43) Date of publication of application: 01.12.2021
(73) Proprietor: Ever Resource Ltd, Cambridge CB4 3AX (GB); Cambridge Enterprise Limited, Cambridge CB2 1TN (GB)
(72) Inventor: SELVARAJ, Vimalnath, Cambridge CB3 0FS (GB); FOX, Athan Lucian, Cambridge CB4 0WS (GB); YIAO, Marcel, Cambridge CB3 0FS (GB); KUMAR, Ramachandran Vasant, Cambridge CB3 0FS (GB); LIU, Robert Chi Yung, Cambridge CB3 0FS (GB)
(74) Representative: Mathys & Squire
(86) International application number: PCT/GB2020/050132
(87) International publication number: WO 2020/152457

(56) References cited:
- CN-A- 105 950 870
- CN-A- 108 531 736
- US-A1- 2015 367 311
- US-A1- 2015 368 750
- US-B1- 8 980 203

## Description

### Field of the Invention

The present invention relates to the recycling of lead-containing waste. In particular, the present invention relates to a method in which lead-containing waste is recycled into leady oxide. The method is particularly suitable for recycling lead-acid battery paste.

### Background to the Invention

Lead-acid batteries are widely used in the automotive and other industries due to their rechargeable nature and relatively low cost.

During discharge, the lead and lead dioxide that is present in the battery plates converts to lead sulfate. Recharging the battery converts the lead sulfate back to lead and lead dioxide. Although lead-acid batteries are rechargeable, over time lead sulfate can crystallise as large passivating crystals in the battery plates thereby reducing the propensity of lead sulfate to convert back into lead and lead dioxide. This results in a deterioration of battery performance. Eventually, the battery will have to be replaced.

In Europe and the USA, a high proportion of waste lead-acid batteries are recycled. In a typical process, the used batteries are comminuted and the lead-containing solids separated from other battery waste components such as plastic materials and the electrolyte. The lead-containing solids originate from the battery plate which is made up of a battery grid and a battery paste. The spent battery paste is passed to a smelter for pyrometallurgical processing into a lead ingot. The lead ingot may then be used for manufacturing new lead-acid batteries. For instance, lead ingot may be used to manufacture a new battery grid, or it may be oxidised using a barton pot or ball-mill process to produce leady oxide, typically a mixture of lead oxide and free metallic lead. This leady oxide may then be reused as the active, redox material in lead-acid battery plates.

These traditional recycling processes are highly energy intensive, with temperatures of approximately 1,100 °C required for the decomposition of lead sulfate. Traditional recycling processes can also be highly polluting. In particular, sulfur dioxide, nitrogen dioxide and, often, lead particles are produced in the high-temperature smelter. In order to prevent pollutants from being released into the atmosphere, specialist equipment and time-consuming processes are required. These can represent a significant expense in the recycling process.

In recent times, methods have been developed which enable lead-acid battery waste to be processed more efficiently. WO 2008/056125 discloses a process in which spent battery paste is mixed with aqueous citric acid so as to generate lead citrate. The lead citrate may then be converted into leady oxide by calcination. This enables the direct production of leady oxide from spent battery paste, without handling an intermediate lead ingot.

There are a number of advantages associated with the method disclosed in WO 2008/056125. In particular, leady oxide is manufactured directly from spent battery paste thereby avoiding the cost and logistics associated with the downstream processing of lead ingot to leady oxide. Moreover, the citrate acts as a fuel in the combustion process, thereby reducing the amount of energy that is required to be supplied to the calcination furnace. The conversion of lead citrate into leady oxide also occurs at a lower temperature than that required for the decomposition of lead sulfate, further reducing the energy burden of the recycling method. In fact, the method disclosed in WO 2008/056125 releases approximately 400 mWh of energy per 1,000 tonnes of battery throughput.

In order for leady oxide to be re-used as a paste for preparing battery plates, it must have a very high purity level. Lead ingot produced by conventional smelting techniques typically exhibits an impurity level of less than 0.1 %, and often less than 0.01 %, by weight. Commercial methods for recycling lead-acid batteries via alternative routes would therefore ideally also provide a lead product having these purity levels. Unfortunately, the leady oxide that is produced following the method disclosed in WO 2008/056125 is not consistently pure enough to be directly used in batteries, and instead requires further processing before use.

Another drawback of the method disclosed in WO 2008/056125 is that it requires a large excess of citric acid to convert a sufficient proportion of the lead that is present in the spent battery paste into lead citrate. This means that the cost of carrying out the method is highly dependent on the cost of citric acid, leaving the economic viability of the method vulnerable to fluctuations in the price of citric acid.

In summary, whilst the method disclosed in WO 2008/056125 represents a significant step forward in the recycling of spent lead-acid batteries, the method is reliant on the use of a large excess of citric acid and the quality of the paste that is produced by the method is often not high enough for direct use in a battery plate.

A further method in which citric acid is used is disclosed in He et al., Minerals, 2017, 7(6), 93. This method addresses some of the shortcomings of the method disclosed in WO 2008/056125. However, the method requires the use of elevated temperatures, relatively long dissolution times and high reagent concentrations. As such, it does not represent an attractive, commercial and scalable method for recycling lead-acid battery paste.

A further method for recycling lead-acid battery paste in which citrates are formed is proposed in Zhu et al., J. Hazard Mater., 2013, 250-251, 387-396. This paper discloses reacting each of PbO, PbO₂ and PbSO₄ individually with a mixture of sodium citrate and acetic acid, and subsequently using the mixture of sodium citrate and acetic acid on spent lead-acid battery paste. However, the purity of the lead citrate obtained by this method is not significantly different from that obtained following the method disclosed in WO 2008/056125.

Another method for recycling battery paste is disclosed in Sun et al., Journal of Power Sources, 2014, 269, 565-576. According to this method, spent lead-acid battery pastes are converted into lead acetate, the lead acetate is crystallised and purified using glacial acetic acid, and the purified lead acetate calcined to give lead oxide. However, the solubility of lead acetate in aqueous systems is very high. This means that considerable effort would be required to crystallise the lead acetate salt from the aqueous phase. A significant amount of the lead burden would also inevitably be lost in the aqueous phase. Accordingly, the method disclosed by Sun *et al.* is not scalable on an industrial level. A further method for recycling lead-containing waste based on the precipitation of lead citrate is disclosed in US 20115/368750 A1. Closest prior art to the present application is CN 108 531 736 A, said document disclosing a method for preparing high-purity lead compounds from waste lead-acid batteries.

There is a need for a method of recycling lead-containing waste, particularly waste originating from lead-acid batteries, which addresses one or more of the problems identified above. In particular, there is a need for a method which provides leady oxide in a form which is pure enough to use directly in a battery plate, which enables a high proportion *(e.g.* substantially zero loss) of the lead from the lead-containing waste to be recycled, and/or which does not require the use of a large excess of reagents.

### Summary of the Invention

The present invention exploits the aqueous solubilities of different lead-acid salts to provide a method in which high quality leady oxide may be produced from lead-containing waste in the absence of an excess of citric acid. In particular, the method uses an acid, such as acetic acid, which forms a lead salt having a high aqueous solubility to dissolve the lead-containing waste. On subsequently adding a second acid, such as citric acid, to the solution, a low solubility, but highly pure, second lead salt precipitates. The precipitate of the second lead salt may then be converted to leady oxide.

The use of an acid which forms a first lead salt having relatively high aqueous solubility means that a higher proportion of the lead-containing waste is dissolved than when an equivalent amount of citric acid is used. Unlike prior art methods, high levels of conversion may be achieved by then adding just stoichiometric amounts of citric acid (or other second acids which form a relatively low solubility salt) to the dissolved lead. Moreover, on adding the second acid, the acid originally used to dissolve the lead-containing waste is regenerated and may be reused. Thus, the present invention provides a method for recycling lead-containing waste in which the reagent burden is minimised.

The present invention as defined in claim 1 provides a method for recycling lead-containing waste. Further embodiments of the invention are defined in dependent claims 2 to 15.

### Description of Various Embodiments

### Lead-containing waste

The present invention provides a method for recycling lead-containing waste.

The lead that is present in the lead-containing waste used in step (a) may be in a number of forms. For instance, the lead-containing waste may contain metallic lead (referred to herein as Pb) or lead in the form of a compound, such as lead oxide (referred to herein as PbO for lead (II) oxide and PbO₂ for lead (IV) oxide), lead carbonate (referred to herein as PbCO₃) or lead sulfate (referred to herein as PbSO₄). It will be appreciated that these materials may be present in the form of compounds of the materials, *e.g*. PbO.PbSO₄, 3PbO.PbSO₄ or 4PbO.PbSO₄.

Preferably, the lead-containing waste used in step (a) contains at least one of Pb, PbO and PbCO₃. More preferably, the lead-containing waste used in step (a) may contain at least one of PbO and PbCO₃, and preferably also Pb. The lead-containing waste used in step (a) may further contain PbO₂.

The lead-containing waste used in step (a) may also comprise lead in the form of PbSO₄. However, the lead-containing waste may also be substantially free from PbSO₄, either because there is no PbSO₄ in the source of the lead-containing waste or because the lead-containing waste has previously been desulfurised. The lead-containing waste that is used in step (a) preferably comprises PbSO₄ in an amount of less than 10 % by weight, preferably less than 1 % by weight, and more preferably less than 0.1 % by weight. A variety of methods may be used to desulfurise lead and these are discussed in more detail below. In preferred methods of desulfurisation, PbSO₄ is converted into PbO or PbCO₃.

The amount of different lead-containing materials in the lead-containing waste will vary depending on the source of the lead-containing waste. The lead-containing waste that is used in step (a) preferably comprises a lead (II) compound, such as PbO or PbCO₃, in an amount of at least 5 %, preferably at least 10 %, and more preferably at least 20 % by weight.

Non-lead components may also be present in the lead-containing waste, *e.g*. in an amount of at least 0.1 % by weight, though these are typically present in an amount of less than 10 %, preferably less than 5 %, such as less than 3 % or less than 1 % by weight. Non-lead components may include metal compounds, carbon and fibres. Metal compounds include barium sulfate, an additive which is often included in lead-acid battery plates to minimise or control crystallisation of lead sulfate. Insoluble carbon materials include carbon black which is typically added as an expander for lead-acid battery plates, graphene and carbon nanotubes. Fibres which are often included in lead-acid battery plates include lignosulfonates. Non-lead component may also include polymers or glass, *e.g*. from separators that may be used in a lead-acid battery.

The method of the present invention is particularly suitable for recycling lead-acid battery paste. Thus, in embodiments, the lead-containing waste that is used in step (a) is derived from lead-acid battery paste. Lead-acid battery paste typically comprises PbSO₄, PbO, PbO₂ and Pb. The proportion of these components in lead-acid battery paste from single batteries may vary significantly depending on the degree to which the battery has been 'spent', *i.e.* used. For instance, lead-acid battery paste from a little-used battery, may find itself in 'waste', but will typically contain relatively large amounts of Pb (*e.g.* greater than 30 % by weight) and PbO, and relatively small amounts of PbSO₄. Moreover, where the lead-acid battery paste is taken from just the negative plate, it may not contain any PbO₂.

However, waste from lead-acid batteries is typically made up of paste from a large number of batteries and so its content of different lead-containing materials is somewhat normalised. Waste lead-acid battery paste may contain PbSO₄ in an amount of at least 40 % by weight. Waste lead-acid battery paste may contain PbO in an amount of at least 5 % by weight. Waste lead-acid battery paste may contain PbO₂ in an amount of at least 10 % by weight. Waste lead-acid battery paste may contain Pb in an amount of at least 1 % by weight.

Where waste lead-acid battery paste has been desulfurised, the PbSO₄ will typically be converted into PbO, though it may also be converted into PbCO₃ or other lead compounds. Thus, the lead-containing waste that is used in step (a) preferably contains at least one of PbO and PbCO₃ in an amount of at least 40 % by weight. During the desulfurisation process, the amount of PbO₂ and Pb in the lead-containing waste will typically remain constant.

Lead-acid battery paste may be obtained from lead-acid batteries by known methods. For instance, lead-acid battery paste may be obtained by a method in which one or more lead-acid batteries are comminuted and the lead-containing waste separated from the other components of the batteries such as plastic materials and the electrolyte.

Lead-containing waste is also available from a number of other sources including cable sheaths, lead sheets from the construction industry, paints, nuclear storage articles and electro-ceramic based PbO. The lead-containing waste may be from a mineral, metallurgical or chemical plant. The lead-containing waste may be a product of PbS ore mining, which has been oxidised by roasting to contain PbO and/or PbSO₄ with impurities such as silica.

In some instances, the method of the present invention is used for recycling electric arc furnace dusts. Electric arc furnace dust is a residue from the production of steel. The presence of zinc in the dust and rising disposal costs have led to initiatives for recycling the dust. This is most commonly done using the Waelz process in which zinc-containing material is treated in a rotary kiln. The process is usually carried out in the presence of carbon (*e.g.* in the form of coke) and preferably also calcium oxide (CaO) or silicon dioxide (SiO₂). The kiln will typically be operated at a temperature of from 1000 to 1500 °C.

However, electric arc furnace dusts contain a number of impurities, including lead-containing compounds. Thus, in embodiments, the lead-containing waste that is used in step (a) is derived from electric arc furnace dusts.

The lead-containing waste used in step (a) may be the electric arc furnace dusts obtained directly from the production of steel, preferably in a desulfurised form. In other words, the electric arc furnace dusts have not yet been subjected to further processing steps, such as zinc recycling processes, other than desulfurisation. After step (a), the lead burden has been dissolved and the remaining solid waste may then be passed to a zinc recycling process, such as the Waelz process.

However, in preferred embodiments, the lead-containing waste used in step (a) is the material left behind after zinc has been removed from the electric arc furnace dusts, *e.g.* in the Waelz process. This material is known as slag (or Waelz clinker) and typically contains PbSO₄ in an amount of at least 40 % by weight. Thus, the lead-containing waste used in step (a) may be slag from a Waelz process. The slag has preferably been desulfurised before use in step (a), *e.g.* using a method described below, and so will contain at least one of PbO and PbCO₃, preferably PbO, in an amount of at least 40 % by weight.

Where the lead-containing material that is used in step (a) is slag from a Waelz process, the slag has preferably been pre-processed with heat. This is believed to remove carbonaceous materials that are used in the Waelz process and which may be present in the Waelz slag, *e.g.* in an amount of at least 10 % by weight. In some embodiments, the method of the present invention comprises the step of pre-processing the Waelz slag with heat, though in other embodiments the slag has already been pre-processed. Where desulfurisation is also carried out, this is preferably conducted after the pre-processing heating step.

Pre-processing of the slag may be carried out at a temperature of at least 500 °C, preferably at least 550 °C and more preferably at least 600 °C. Pre-processing of the slag may be carried out at a temperature of up to 800 °C, preferably up to 750 °C and more preferably up to 700 °C. Pre-processing of the slag may be carried out at a temperature of from 500 to 800 °C, preferably from 550 to 750 °C and more preferably from 600 to 700 °C.

Pre-processing of the slag may be carried out for a period of at least 15 minutes, preferably at least 30 minutes, and more preferably at least 45 minutes. Pre-processing of the slag may be carried out for a period of up to 4 hours, preferably up to 2 hours, and more preferably up to 90 minutes. Thus, pre-processing of the slag may be carried out for a period of from 15 minutes to 4 hours, preferably from 30 minutes to 2 hours, and more preferably from 45 to 90 minutes.

Lead-containing waste may be found in many forms, *e.g.* in the form of a dust, slag or sludge, or even in the form of a mineral. However, the lead-containing waste used in step (a) will typically be in a comminuted, e.g. granule or powder, form during the recycling method of the present invention. For instance, the lead-containing waste used in step (a) may be in a particulate form, where the particles pass through a mesh having openings with a diameter of 1000 µm, preferably 500 µm, and more preferably 250 µm.

### Step (a) - dissolution in a first acid

The lead-containing waste is dissolved in an aqueous solution of a first acid in step (a) of the method of the present invention. This results in the formation of a solution of a first lead salt.

It will be appreciated that the first lead salt will have a lead cation, with the anion being from the first acid. In preferred embodiments, the first lead salt is a lead(II) salt. The first lead salt preferably has a solubility in water of at least 100 g/L, preferably at least 200 g/L, and more preferably at least 300 g/L. References herein to solubility refer to equilibrium solubility in water at 25 °C.

The first acid is preferably a Bronsted-Lowry acid, *i.e*. a proton donor. The first acid may be an organic acid or an inorganic acid, however preferred first acids are organic acids. A particularly suitable organic acid is acetic acid which forms a solution of lead acetate Pb(CH₃COO)₂. Other organic acids that could be used include carboxylic acids such as maleic acid, lactic acid and acrylic acid. Suitable inorganic acids include nitric acid.

The aqueous solution of the first acid preferably has a molarity of at least 0.1 mol/L, preferably at least 0.25 mol/L, and more preferably at least 0.5 mol/L. The aqueous solution of the first acid preferably has a molarity of up to 7 mol/L, preferably up to 3 mol/L, and more preferably up to 1.5 mol/L. Thus, the aqueous acid solution of the first acid may have a molarity of from 0.1 to 7 mol/L, preferably from 0.25 to 3 mol/L, and more preferably from 0.5 to 1.5 mol/L.

The lead-containing waste is preferably added to the aqueous solution of the first acid in an amount of at least 10 g, preferably at least 50 g, and more preferably at least 80 g of waste per litre of aqueous acid. The lead-containing waste may be added to the aqueous solution of the first acid in an amount of up to 650 g, preferably up to 300 g, and more preferably up to 150 g of waste per litre of aqueous acid. Thus, the lead-containing waste may be added to the aqueous solution of the first acid in an amount of from 10 to 650 g, preferably from 50 to 300 g, and more preferably from 80 to 150 g of waste per litre of aqueous acid.

An acidic environment (*i.e.* a pH of lower than 7, preferably up to 6.5 and more preferably up to 6) is present throughout dissolution step (a). Thus, the aqueous solution of a first acid and the solution of the first lead salt may both exhibit a pH of less than 7, preferably less than 6.5 and more preferably less than 6. The pH will typically not drop below 2 throughout step (a). All pH values mentioned herein may be measured using conventional methods, such as with a pH probe.

The lead-containing waste may be dissolved in the aqueous solution of the first acid at a temperature of at least 0 °C, preferably at least 10 °C, and more preferably at least 15 °C. The lead-containing waste may be dissolved in the aqueous solution of the first acid at a temperature of up to 90 °C, preferably up to 50 °C, and more preferably up to 30 °C. Thus, the lead-containing waste may be dissolved in the aqueous solution of the first acid at a temperature of from 0 to 90 °C, preferably from 10 to 50 °C, and more preferably from 15 to 30 °C.

It will be appreciated that higher temperatures and higher concentrations of the first acid will typically be used for dissolution step (a) where higher amounts of lead containing waste are used.

The lead-containing waste will typically be dissolved in the aqueous solution of the first acid at ambient pressure, *i.e.* without the application or removal of pressure.

Dissolution of the lead-containing waste in the aqueous solution of the first acid may be accelerated by agitation of the mixture, *e.g*. by stirring or ultrasound.

The lead-containing waste may be dissolved in the aqueous solution of the first acid for a period of at least 1 minute, preferably at least 5 minutes, and more preferably at least 15 minutes. The lead-containing waste may be dissolved in the aqueous solution of the first acid for a period of up to 120 minutes, preferably up to 60 minutes, and more preferably up to 45 minutes. Thus, the lead-containing waste may be dissolved in the aqueous solution of the first acid for a period of from 1 to 120 minutes, preferably from 5 to 60 minutes, and more preferably from 15 to 45 minutes.

In some embodiments, it may be desirable to contact the lead-containing waste with a redox reagent. This assists dissolution of lead-containing materials that are not in the +2 oxidation state by conversion into the +2 oxidation state. For instance, a redox reagent may convert lead-containing materials in the +4 oxidation state such as PbO₂ into PbO, which then readily reacts with the aqueous solution of the first acid to form a soluble salt. Without the use of a redox reagent, the conversion of PbO₂ into a salt will generally proceed fairly slowly. A redox reagent may also assist with the conversion of metallic lead into PbO, though Pb may also form a salt with the first acid without contact with a redox reagent.

Preferably, the redox reagent will be a reducing agent, for instance for lead compounds in the +4 oxidation state. Preferably, the redox reagent will also be an oxidising agent, for instance for metallic lead. Particularly preferred redox reagents include hydrogen peroxide which functions both as an oxidising agent and reducing agent. However, other redox reagents may be used. For example, metal hydrides, hydrogen gas or inorganic salts may be used as reducing agents. Organic redox agents may also be used.

The redox reagent may be contacted with the lead-containing waste before or during step (a) of the recycling method. When the redox reagent is contacted with the lead-containing waste during step (a), the redox reagent may be introduced into the aqueous solution of the first acid before the lead-containing waste is dissolved therein, or the redox reagent may be introduced once the lead-containing waste has already been partially dissolved.

The redox reagent may be used in the form of a solution having a molarity of at least 1 mol/L, preferably at least 3 mol/L, and more preferably at least 5 mol/L. The redox reagent may be used in the form of a solution having a molarity of up to 25 mol/L, preferably up to 20 mol/L, and more preferably up to 15 mol/L. Thus, the redox reagent may be used in the form of a solution having a molarity of from 1 to 25 mol/L, preferably from 3 to 20 mol/L, and more preferably from 5 to 15 mol/L.

The redox reagent solution may be added to the aqueous solution of the first acid in an amount of at least 1 ml, preferably at least 5 ml, and more preferably at least 10 ml per litre of aqueous acid. The redox reagent solution may be added to the aqueous solution of the first acid in an amount of up to 100 ml, preferably up to 50 ml, and more preferably up to 30 ml per litre of aqueous acid. Thus, the redox reagent solution may be added to the aqueous solution of the first acid in an amount of from 1 to 100 ml, preferably from 5 to 50 ml, and more preferably from 10 to 30 ml per litre of aqueous acid.

In some embodiments, it may be desirable to add an alkali metal acetate, such as sodium acetate (CH₃COONa), during step (a) of the method. The alkali metal acetate desulfurises PbSO₄ by converting it into PbO. However, it is generally preferred for step (a) to be carried out substantially in the absence of alkali metal ions. Thus, desulfurisation is preferably carried out as a pre-treatment step, which is described in detail below.

In some embodiments, the lead-containing waste used in step (a) may comprise material which is insoluble in the aqueous solution of the first acid and so remains as an insoluble material in the solution of the first lead salt. Insoluble material may be present in the lead-containing waste in an amount of at least 0.01 %, more typically at least 0.1 %, and still more typically at least 1 % by weight. For instance, lead-acid battery paste typically contains from 2 to 5 %, and more typically from 3 to 3.5 % by weight of insoluble material. However, other lead-containing waste such as that reclaimed from landfill may contain much higher levels of insoluble materials, *e.g.* up to about 60 % by weight.

The insoluble material may comprise one or more of metal compounds such as barium sulfate, carbon such as carbon black, graphene and/or carbon nanotubes, and fibres such as lignosulfonates. In some embodiments, the insoluble material comprises metal compounds, carbon and fibres. The insoluble material may also comprise polymers or glass. The insoluble material may also contain some lead, though this is generally less preferred. For instance, the insoluble material may comprise Pb, *e.g.* if it is present in relatively large particle sizes or the dissolution period is short, or PbSO₄.

Where the lead-containing waste comprises insoluble materials, these are preferably recovered from the solution that is formed in step (a). This is a key advantage of the present invention. By dissolving the lead-containing waste in an aqueous solution of the first acid, the opportunity to remove insoluble components that would represent impurities in leady oxide, but which are valuable in their isolated form, is provided. This is unlike prior art methods in which lead citrate suspensions are prepared directly from lead-containing waste. In some embodiments, the recovered insoluble materials are reused.

Suitable methods for recovering the insoluble material from the solution of the first lead salt that is formed in step (a) include filtration, though a variety of other methods may be used such as a settling tank or centrifugation.

### Step (b) - precipitation using a second acid

In step (b) of the present invention, a second lead salt is precipitated by the addition of a second acid to the solution of the first lead salt. This leads to the formation of a lead-depleted solution and a precipitate of a second lead salt.

It will be appreciated that the second lead salt will have a lead cation, with the anion being from the second acid. In preferred embodiments, the second lead salt is a lead(II) salt. The second lead salt has a lower solubility in water than the first lead salt, *e.g.* by at least 100 g/L, preferably by at least 200 g/L, and more preferably by at least 400 g/L. The second lead salt preferably has a solubility in water of up to 10 g/L, preferably up to 1 g/L, and more preferably up to 0.1 g/L.

As with the first acid, the second acid is preferably a Bronsted-Lowry acid, *i.e.* the second acid is a proton donor. The second acid is citric acid which forms a lead citrate precipitate. Since lead citrate has very low solubility under aqueous conditions, minimal citrate salt is 'lost' by remaining in solution.

The lead citrate precipitate will typically be present in the form of the compound having the formula Pb₃(C₆H₃O₇)₂. Some of the lead citrate may also be present in its less stable form of Pb(C₆H₈O₇) for instance if an excess of citric acid is present, though the lead citrate precipitate will typically consist of Pb₃(C₆H₅O₇)₂. Advantageously, tri-lead citrate requires a lower amount of citric acid to form than mono-lead citrate. The lead citrate precipitate may be in a hydrated form, typically Pb₃(C₆H₅O₇)₂ xH₂O, where x can be 1 to 3.

The second acid is added to the solution of the first lead salt in an up to stoichiometric amount for the formation of the second lead salt from the lead ions in the solution of the first lead salt. By using a stoichiometric, or slightly under stoichiometric, amount of the second acid complete conversion of the second acid into the second lead salt is ensured. This is unlike prior art methods in which a large of excess of citric acid, prolonged reactions times and heating are often required for high levels of conversion. Indeed, by adding citric acid or another second acid for the first time in step (b), the method of the present invention ensures that the reaction between the second acid and spent lead-acid battery paste may be effectively quantitative.

The second acid may be added to the solution of the first lead salt in up to 100%, preferably up to 98 %, and preferably up to 95 % of the stoichiometric amount required for the formation of the second lead salt. The second acid may be added to the solution of the first lead salt in at least 60 %, preferably at least 75 %, and more preferably at least 80 % of the stoichiometric amount required for the formation of the second lead salt. Thus, the second acid may be added to the solution of the first lead salt in from 60 to 100 %, preferably from 75 to 98 %, and more preferably from 80 to 95 % of the stoichiometric amount required for the formation of the second lead salt.

The amount of lead ions that are present in the solution of the first lead salt may be measured using known techniques. The amount of lead ions may be measured directly, *e.g.* using lead ion sensors, or indirectly. The amount of second acid required may then be calculated based on the measured amount of lead ions.

It will be appreciated that a stoichiometric amount of citric acid for conversion of the lead ions in the solution of the first lead salt to Pb₃(C₆H₅O₇)₂ is 0.67 moles per mole of lead ions. This is demonstrated by the following equation in which lead acetate is converted into lead citrate:

3Pb(CH₃COO)₂ + 2C₆H₈O₇ → Pb₃(C₆H₅O₇)₂ + 6CH₃COOH

Thus, citric acid is added to the solution of the first lead salt in an amount of up to 0.67 moles, preferably up to 0.65 moles, and more preferably up to 0.63 moles per mole of lead ions in the solution. Citric acid may be added to the solution of the first lead salt in an amount of at least to 0.40 moles, preferably at least 0.50 moles, and more preferably at least 0.55 moles per mole of lead ions in the solution. Thus, citric acid may be added in an amount of from 0.40 to 0.67 moles, preferably from 0.50 to 0.65 moles, and more preferably from 0.55 to 0.63 moles per mole of lead ions in the solution of the first lead salt.

The second acid may be added to the solution of the first lead salt in the form of a powder or as an aqueous solution.

An acidic environment (*i.e.* a pH of lower than 7) is typically present throughout precipitation step (b). Due to the liberation of the first acid, pH will typically reduce during precipitation step (b), *e.g.* by at least 0.1, preferably at least 0.2, and more preferably at least 0.3. The pH will typically not drop below 2 throughout step (b).

The precipitation of the second lead salt may take place at a temperature of at least -10 °C, preferably at least 0 °C, and more preferably at least 5 °C. The precipitation of the second lead salt may take place at a temperature of up to 80 °C, preferably up to 40 °C, and more preferably up to 30 °C. Thus, the precipitation of the second lead salt may take place at a temperature of from -10 to 80 °C, preferably from 0 to 40 °C, and more preferably from 5 to 30 °C.

The second lead salt will typically be precipitated from the solution of the first lead salt at ambient pressure, *i.e.* without the application or removal of pressure.

Precipitation of the second lead salt from the solution of the first lead salt may be accelerated by agitation of the solution, *e.g.* by stirring or ultrasound.

Precipitation of the second lead salt may take place for a period of at least 2 minutes, preferably at least 5 minutes, and more preferably at least 10 minutes. Precipitation of the second lead salt may take place for a period of up to 120 minutes, preferably up to 60 minutes, and more preferably up to 45 minutes. Thus, precipitation of the second lead salt may take place for a period of from 2 to 120 minutes, preferably from 5 to 60 minutes, and more preferably from 10 to 45 minutes.

The precipitate of the second lead salt is preferably separated from the lead-depleted solution before conversion into leady oxide. This enables water-soluble impurities which are present in the lead-containing waste to be removed as part of the lead-depleted solution. Suitable methods for separating the precipitate of the second lead salt from the lead-depleted solution include filtration, though a variety of other methods may be used such as a settling tank or centrifugation. Smaller mesh sizes are typically preferred to ensure that all second lead salt precipitate is caught. However, in some embodiments, the second lead salt precipitate may be of a size that means that larger mesh sizes may be suitable.

The separated second lead salt may be washed, *e.g*. using water. This removes any water soluble impurities from the precipitate.

The second lead salt may also be purified. Suitable methods for purification include recrystallisation. However, generally purification is not required for the method of the present invention to provide the second lead salt with high purity. Thus, the second lead salt preferably comprises up to 5 %, preferably up to 1 %, and more preferably up to 0.1 % by weight of impurities (*i.e.* of non-second lead salt material), whether the second lead salt has been purified or not. Purity may be measured using known methods, *e.g.* spectroscopic techniques such as ICP-AES (inductively coupled plasma atomic emission spectroscopy). ICP-AES may be carried out as detailed in the examples.

The lead-depleted solution contains the first acid that was used to dissolve the lead-containing waste in step (a). Although this acid forms the relatively soluble first lead salt in step (a), it is regenerated on conversion of the first lead salt to the second lead salt in step (b). In preferred embodiments, the lead-depleted solution is recycled and used as the aqueous solution of the first acid for dissolving lead-containing waste in step (a). By recycling the lead-depleted solution, the first acid is not consumed but can be used repeatedly. Thus, the first acid may be perceived as a catalyst rather than a reagent in the recycling process.

The lead-depleted solution may also comprise residual lead, preferably in the form of the dissolved first lead salt. This is particularly the case when the second acid is used in step (b) in less than a stoichiometric amount as compared to the lead ions in the solution of the first lead salt. Recycling residual lead as part of the lead-depleted solution ensures that lead is not lost during the method of the present invention.

### Step (c) - conversion into leady oxide

In step (c) of the method of the present invention, the precipitate of the second lead salt is converted into leady oxide. Leady oxide comprises PbO and, typically, also some metallic lead. For instance, the leady oxide may contain metallic lead in an amount of at least 1 % by weight. In general, the leady oxide will not contain metallic lead in an amount of more than 40 % by weight.

Preferably, the precipitate of the second lead salt is converted into leady oxide by calcination. This involves introducing the second lead salt precipitate into a calcination furnace and heating it to a temperature at which the salt decomposes and/or combusts to give leady oxide. Advantageously, where the second lead salt is lead citrate, the citrate acts as a fuel and combusts during calcination, thereby reducing the amount of energy that is required.

Calcination may take place at a temperature of at least 250 °C, preferably at least 300 °C, and more preferably at least 325 °C. Calcination may take place at a temperature of up to 1000 °C, preferably up to 600 °C, and more preferably up to 450 °C. Thus, calcination may take place at a temperature of from 250 to 1000 °C, preferably from 300 to 600 °C, and more preferably from 325 to 450 °C. These temperatures are particularly suited to the calcination of lead citrate precipitate. The temperatures typically provide leady oxide comprising a mixture of PbO and Pb, with lower temperatures generally used for the preparation of leady oxide which is free from Pb.

Calcination may take place in an atmosphere which comprises oxygen. It will be appreciated that higher amounts of oxygen will generally favour the formation of PbO, while a low-oxygen environment will generally favour the formation of metallic lead.

Calcination may take place at an oxygen partial pressure of at least 0.01 atm, preferably at least 0.05 atm, and more preferably at least 0.1 atm. Calcination may take place at an oxygen partial pressure of up to 5 atm, preferably up to 1 atm and more preferably up to 0.5 atm. Thus, calcination may take place at an oxygen partial pressure of from 0.01 to 5 atm, preferably from 0.05 to 1 atm, and more preferably from 0.1 to 0.5 atm. For instance, calcination may take place in air at atmospheric pressure, *i.e.* without the application or removal of pressure.

Calcination may take place for a time period of at least 10 minutes, preferably at least 20 minutes, and more preferably at least 30 minutes. Calcination may take place for a time period of up to 6 hours, preferably up to 2 hours, and more preferably up to 1 hour. Thus, calcination may take place for a time period of from 10 minutes to 6 hours, preferably from 20 minutes to 2 hours, and more preferably from 30 minutes to 1 hour.

An advantage of the method of the present invention is that the method is suitable for preparing leady oxide at very high purities. Thus, the leady oxide preferably comprises PbO and Pb in a total amount of at least 99 %, preferably at least 99.5 %, and more preferably at least 99.9 % by weight. Leady oxides having these purities are comparable to those obtained using a Barton pot or ball-mill process, in which a lead ingot is oxidised. Purity may be measured using known methods, *e.g.* spectroscopic techniques such as ICP-AES (inductively coupled plasma atomic emission spectroscopy). ICP-AES may be carried out as detailed in the examples.

In some instances, metallic lead, Pb, rather than leady oxide may be the desired product, in which case a temperature in excess of 1000 °C is preferably used in step (c) of the present invention. A reducing agent may also be used, *e.g.* carbon monoxide or coke, in which case temperatures which are lower than 1000 °C can also be used (*e.g.* 400 to 600 °C). Preferably, the partial pressure of oxygen in the system will be limited, for instance to up to 0.000167 atm. An inert gas such as nitrogen or a vacuum may be used to displace oxygen from the reaction environment.

In other instances, lead citrate may be the desired product, in which case the method will not comprise step (c).

### Further processing of the leady oxide

The method of the present invention produces leady oxide as the final product of the method. However, in other embodiments, it is desirable to further process the leady oxide.

For instance, the leady oxide may be processed into battery plates. The leady oxide may be processed into battery plates by known methods. For instance, the leady oxide may be combined with one or more battery plate additives and an acid to form a paste. If necessary, the leady oxide may be comminuted before it is combined with the battery plate additives and acid. Sulfuric acid will typically be used as the acid, which converts the PbO in the leady oxide into PbSO₄. Suitable battery plate additives include those listed above and include metal compounds, insoluble carbon and fibres. In some embodiments, one or more of the insoluble components that may be recovered at the end of step (a) of the present invention may be used as a battery plate additive. The paste may then be applied to a grid, typically a lead-alloy grid, and allowed to cure.

The battery plates may, in turn, be incorporated into a lead-acid battery. The battery plates may be incorporated into a lead-acid battery using known methods. For instance, the battery plates may be introduced into a plastic battery casing, and the battery charged with sulfuric acid. Once the battery is assembled, the lead acid, *e.g*. PbSO₄, in the battery plates is converted to PbO₂ on the positive plate and to metallic lead on the negative plate by applying a current.

### Pre-treatment of the lead-containing waste

As mentioned above, lead-containing waste often contains PbSO₄. For instance, waste lead-acid battery paste and electric arc furnace dusts both contain PbSO₄. In these embodiments, the method of the present invention preferably comprises a pre-treatment step in which the lead-containing waste is desulfurised. This is because PbSO₄ will, for the most part, not react with the aqueous acid in step (a) of the present invention. It will be appreciated that the pre-treatment step takes place before step (a).

The pre-treatment step preferably comprises desulfurising the lead-containing waste by converting PbSO₄ into another lead-containing compound, typically a lead(II) compound. In preferred desulfurising methods, PbSO₄ is converted into PbO or PbCO₃, and more preferably into PbO. The PbO or PbCO₃ will then react with the aqueous solution of a first acid in step (a) of the present invention to form a first lead salt.

Conversion of PbSO₄ into PbO may be achieved by contacting the lead-containing waste with a base. A wide range of bases may be used in the pre-treatment step. Suitable bases include alkali metal hydroxides, *e.g.* NaOH, KOH or LiOH. The stoichiometry of the reaction with NaOH is shown in the following equation:

PbSO₄ + 2NaOH → Na₂SO₄ + PbO + H₂O

The base may be added in an amount of at least 1.5 moles, preferably at least 1.75 moles, and more preferably at least 2 moles per mole of lead sulfate in the lead-containing waste. The base may be added in an amount of up to 3 moles, preferably up to 2.5 moles, and more preferably up to 2.25 moles per mole of lead sulfate in the lead-containing waste. Thus, the base may be added in an amount of from 1.5 to 3 moles, preferably from 1.75 to 2.5 moles, and more preferably from 2 to 2.25 moles per mole of lead sulfate in the lead-containing waste.

The addition of too much or too little base may result in the production of lead hydroxide, rather than PbO. However, significant amounts of lead hydroxide in the mixture can cause caking. To ensure that the right amount of base has been added, it is generally preferred to monitor the PbSO₄ content in the lead-containing waste during the pre-treatment step, and to add the base until the PbSO₄ content is reduced to a target level. The target level may be up to 500 ppm, preferably up to 300 ppm, and more preferably up to 100 ppm by weight of the lead-containing waste.

The monitoring may be direct monitoring by measuring the content of PbSO₄ in the lead-containing waste, *e.g.* using spectroscopic techniques such as ICP-AES. ICP-AES may be carried out as detailed in the examples. Alternatively, monitoring may be carried out indirectly by monitoring a parameter which correlates with the amount of PbSO₄ in the lead-containing waste.

Conversion of PbSO₄ into PbCO₃ may be achieved by contacting the lead-containing waste with a carbonate. Suitable carbonates include alkali metal carbonates, *e.g.* Na₂CO₃, K₂CO₃ or Li₂CO₃.

The carbonate may be added in an amount of at least 0.75 moles, preferably at least 0.85 moles, and more preferably at least 1 mole per mole of lead sulfate in the lead-containing waste. The carbonate may be added in an amount of up to 1.5 moles, preferably up to 1.25 moles, and more preferably up to 1.1 moles per mole of lead sulfate in the lead-containing waste. Thus, the carbonate may be added in an amount of from 0.75 to 1.5 moles, preferably from 0.85 to 1.25 moles, and more preferably from 1 to 1.1 moles per mole of lead sulfate in the lead-containing waste.

As before, it is generally preferred to monitor the PbSO₄ content in the lead-containing waste during the pre-treatment step, and to add the carbonate until the PbSO₄ content is reduced to a target level, *e.g.* of up to 500 ppm, preferably up to 300 ppm, and more preferably up to 100 ppm by weight of the lead-containing waste.

The desulfurisation pre-treatment step may be carried out at a temperature of at least 0 °C, preferably at least 10 °C, and more preferably at least 15 °C. The desulfurisation step may be carried out at a temperature of up to 90 °C, preferably up to 50 °C, and more preferably up to 30 °C. Thus, the desulfurisation step may be carried out at a temperature of from 0 to 90 °C, preferably from 10 to 50 °C, and more preferably from 15 to 30 °C. It will be appreciated that though heat will not be applied to take the reaction above these ranges, heat that is generated in the reaction may itself raise the temperature of the reaction beyond these values.

The pre-treatment step will typically be carried out at ambient pressure, *i.e.* without the application or removal of pressure.

The pre-treatment step may be accelerated by agitation of the mixture, *e.g.* by stirring or ultrasound.

The pre-treatment step will preferably be carried out for a period of time until the target level of PbSO₄ is reached. Typically, the desulfurisation step may be carried out for a period of from 30 minutes to 24 hours, preferably 1 to 12 hours, and more preferably 1.5 hours to 10 hours.

The desulfurised lead-containing waste may be separated from the aqueous phase using filtration, though a variety of other methods may be used such as a settling tank or centrifugation. The desulfurised lead-containing waste may optionally be washed (*e.g.* with water) and dried before being used in step (a).

Once the pre-treatment step is complete, the sulfate ions, *e.g.* in the form of dissolved Na₂SO₄ if NaOH or Na₂CO₃ was used in the pre-treatment step, may be removed from the desulfurised lead-containing waste with the aqueous phase. The sulfate ions may be isolated, *e.g.* by crystallising as a result of evaporating the water, and optionally used in another application. For instance, the recovered sulfate may be used in the production of glass. At least some of the energy required for water evaporation may be recovered from the calcination process that may be used to form leady oxide in step (c).

Lead-containing waste, such as lead-acid battery paste, that has already been desulfurised, *e.g.* by converting PbSO₄ into PbCO₃, may also be obtained commercially or using a suitable commercial system. For instance, desulfurised lead-containing waste may be obtained using commercial systems in which the target level of PbSO₄ is up to 30 % by weight, or up to 10 % by weight of the lead-containing waste. If desired, commercially available desulfurised waste may be desulfurised further, *e.g.* using a method disclosed herein, to give a target level of PbSO₄ of up to 500 ppm, preferably up to 300 ppm, and more preferably up to 100 ppm by weight of the lead-containing waste. However, excess PbSO₄ may also simply be isolated along with other insoluble materials such as barium sulfate, carbon and organic fibres in step (a) of the present invention.

### Examples

The present invention will now be illustrated by way of the following non-limiting examples.

In the examples, X-ray diffraction was carried out on a D8 advance Bruker diffractometer and analysed with the software Highscore. The following settings were used: Cu Kα radiation with Ni-0.012 filter; operating at 40 kV at 40 mA; range: 5 to 90° 2theta; step size: 0.03°; scan rate: 3.5° min⁻¹.

Thermogravimetric analysis and differential scanning calorimetry were carried out with a STA 409 EP Netzsch equipment. The following settings were used: in static air (chamber approximately 0.15 L); sample size: 20 to 30 mg; Temperature range: 0 to 600 °C; and heating rate: 5 °C/min.

Inductively coupled plasma atomic emission spectroscopy (ICP-AES) was carried out using a Perkin Elmer Optima 8000 ICP-OES. The following settings were used: gas: argon; plasma gas flow: 8 L/min; auxiliary gas flow: 0.2 L/min; nebulizer gas flow: 0.7 L/min; RF power: 1500 watts.

Solid samples (usually 0.10 g to 0.50 g of powder) to be analysed with ICP-AES were subjected to different treatments, adapted to the specific composition of each sample, to fully dissolve them in aqueous media. Each treatment involved a combination of 1, 2 or 3 different solutions in specific orders. The solutions used were 70 wt% nitric acid, 30 wt% hydrogen peroxide and 1M potassium hydroxide (each 99.9 % purity). Each preparation was then completed to 100 ml with nitric acid of concentrations chosen so that the concentration in nitric acid of the final solution amounted to 2 wt%.

Standard solutions were initially bought from Sigma, but subsequently standard solutions were prepared using ultra-pure elements from Sigma, deionised water and pure nitric acid to take into account matrix effects.

### Example 1: recycling a mixture of battery paste waste

### Desulfurisation

A representative mixture of waste battery paste was dried, ground and sieved to a size of less than 250 µm. The resultant dried powder comprised mainly PbSO₄ (70 wt%).

To the dried powder (30.00 g) was added a solution of NaOH (7.96 g) in water (60 ml). The resultant suspension was stirred at 400 rpm for a period of 2 hours at room temperature. A powder was then separated from the suspension by filtration, washed with deionised water and air-dried under suction.

The final mass obtained was 24.41 g of powder, which is close to the calculated amount of 24.46 g.

X-ray diffraction analysis could not detect any remaining lead sulfate (PbSO₄, PbO.PbSO₄, 3PbO.PbSO₄ or 4PbO.PbSO₄) in the product. The main phases detected were PbO, PbO.H₂O and PbO₂, as expected. ICP-AES measurement on samples of this powder showed a content of sulfate ion of 0.1 wt% (versus 18.22 wt% for untreated paste) which can be attributed to BaSO₄ additives.

ICP-AES analysis on the filtrate revealed that it indeed retained the SO₄²⁻ ions that were extracted from the paste as well as most of the Na⁺ ions from NaOH.

### Dissolution

The desulfurised lead-acid battery paste (10.00 g) was dissolved in a solution of glacial acetic acid (5.2 ml) in water (100 ml), followed by the addition of H₂O₂ (2.0 ml, 30 wt%). The dissolution of the majority of solids could be directly observed within tens of seconds, producing a clear and colourless solution with a minute proportion of insoluble material suspended in the liquid phase. The mixture was stirred at a rate of 500 rpm, at room temperature, for a period of 5 minutes.

The clear and colourless solution was then filtered. The filtride (3.4 wt% of the paste) was analysed and showed to be mainly BaSO₄, carbon and fibres.

### Precipitation of lead citrate

Solid crystals of citric acid (5.17 g) were added to the filtrate from the dissolution step. The precipitation of white lead citrate began instantaneously but the solution was left to react for 1 hour at 80 °C under stirring at 400 rpm. The solution was then filtered and the filtride (lead citrate) recovered, dried and weighed. The mass obtained was 13.12 g, which is very close to the expected figure of 13.32 g. X-ray diffraction was used to confirm that the powder obtained was exclusively Pb₃(C₆H₅O₇)₂; thermogravimetric analysis on both pure Pb₃(C₆H₅O₇)₂ and the synthesised powder showed a perfect match. ICP-AES analysis on the powder showed complete absence of S, Ba, Sn, Al, Fe, Zn and Sb (0 %); a Cu content in the order of magnitude of 10 ppm; and Na content in the order of magnitude of 500 ppm.

With a more stringent washing protocol, the Na content was reduced to figures below 100 ppm, thereby demonstrating that Na content in the above examples is a function of the quality of water and efficiency of washing.

### Calcination of lead citrate

Lead citrate (10.00 g) was heated in a muffle furnace at 350 °C for 1 hour in air then left to cool down to room temperature. The resultant orange/yellow/green powder (lead monoxide) was then recovered and analysed. The expected mass for a total combustion of Pb₃(C₆H₅O₇)₂ to PbO was 6.70 g. The actual mass of material obtained by the process was 6.18 g; this is because some of the PbO was reduced to lead metal (Pb) during the calcination-combustion process. The presence of Pb was confirmed by differential scanning calorimetry.

The powder was analysed with XRD to confirm that the phase obtained was PbO. ICP-AES was used to confirm the high purity of the material, which was equivalent to the purity levels seen in the case of the lead citrate above.

### Example 2: recycling a spent battery negative grid

### Desulfurisation

A spent negative grid (100 g) was immersed whole in a solution of KOH (37 g) in water (250 ml) and left to react for 8 hours under low-speed stirring (50 rpm). The grid, light grey/white in aspect before reaction, progressively turned green as PbSO₄ (white) was converted to beta PbO (green). After the reaction, the grid was taken out of the clear solution and the paste was readily separated from the metal current collector before being rinsed, dried and analysed.

XRD could not detect any remaining PbSO₄ after reaction and the components detected were mainly PbO, PbO hydrates, lead hydroxides and metal Pb. The sulfate content in the paste was confirmed with titration analysis which revealed that the sulfate content of the paste after reaction was less than 0.1 wt%.

### Dissolution

The desulfurised paste (50.00 g) was then dissolved in aqueous acetic acid solution (400 ml, 8 wt%) and stirred at 400 rpm for 10 min. H₂O₂ was not added as the grid was a negative plate and did not contain any PbO₂. The volume of solids in suspension visibly decreased due to dissolution.

The solution was then filtrated and the filtride was analysed and found to be mainly BaSO₄, carbon, fibres and fragments of metal Pb from the grid amounting to 7 wt% of the total mass of paste.

Part of the solution was evaporated to crystallise what was expected to be lead acetate. XRD pattern for the crystals showed a perfect match for pure lead acetate trihydrate and the decomposition of the crystals with thermogravimetry showed similar decomposition patterns confirming that the solution produced is indeed a solution of lead acetate.

### Precipitation of lead citrate

A solution of citric acid (10 ml, 50 wt%) was added to the filtrate (200 ml) and stirred for 10 min at room temperature. Precipitation of a white solid was immediately observed. The precipitate was then filtered out, dried and weighed. The mass obtained was 12.76 g which was close to the expected 12.88 g corresponding to the maximum amount of lead citrate that could be formed with the amount of citric acid used.

XRD and thermogravimetric analysis showed a perfect match for Pb₃(C₆H₅O₇)₂.

### Combustion of lead citrate

The precipitate was combusted in a muffle furnace under air at 400 °C for 1 hour and analysed under XRD. Colour turned from pure white to bright orange which indicated the formation of PbO and was confirmed with XRD analysis. The only other phase that could be detected was metal Pb.

### Example 3: production of lead citrate from sulfate-rich lead paste

Experiments were conducted on spent lead-acid battery paste having a PbSO₄ content of approximately 75 % by weight.

### Desulfurisation

In a first experiment, lead paste was desulfurised using a stoichiometric amount of NaOH. In a second experiment, lead paste was desulfurised using a stoichiometric amount of Na₂CO₃. In both experiments, the measured weight loss was close to the theoretical weight loss expected as a result of desulfurisation.

### Dissolution

A 5.00 g sample of desulfurised paste was taken from each desulfurisation experiment. The samples were each separately combined with acetic acid (2.15 ml), H₂O₂ (1.00 ml, ~35%) and deionised water (50 ml). The resulting mixtures were stirred for about 30 min at 400 rpm at room temperature. The mixtures were filtered and the insoluble components recovered.

### Precipitation of lead citrate

A stoichiometric amount of citric acid was added to the two filtrates. The formation of lead citrate as a fine white precipitate was immediately observed in both experiments. The mixtures were stirred using a magnetic stirrer for 1 hour at 400 rpm at room temperature. The mixtures were filtered, and the white precipitates dried at 80 °C overnight. XRD analysis showed characteristic peaks of Pb₃(C₆H₅O₇)₂ in both experiments.

### Example 4: recycling desulfurised paste

Commercially available desulfurised lead-containing paste was obtained. The as-received desulfurised paste had been partially desulfurised to a PbSO₄ level of approximately 28 % by weight (using a carbonate). The paste used in Example 3 was notionally a representative feed paste for the commercial desulfurisation process which was used to provide the as-received desulfurised paste in Example 4.

### Dissolution

The as-received desulfurised paste (10.00 g) was combined with acetic acid (4.3 ml), H₂O₂ (3.00 ml, ~35%) and deionised water (100 ml). The resulting mixture was stirred for less than 5 min at 400 rpm at room temperature. The mixtures were filtered and the insoluble components recovered.

### Precipitation of lead citrate

A stoichiometric amount of citric acid was added to the filtrate. The formation of lead citrate as a fine white precipitate was immediately observed. The mixture was stirred using a magnetic stirrer for 1 hour at 400 rpm at room temperature. The mixture was filtered, and the white precipitates dried at 80 °C overnight. XRD analysis showed characteristic peaks of Pb₃(C₆H₅O₇)₂.

### Combustion of lead citrate

The dried precipitate was heated in a muffle furnace to 350 °C at 5 °C/min and held for 1 hour. The sample was allowed to cool to room temperature, before being analysed using XRD. Impure leady oxide was produced.

For comparison, the lead citrate produced in Example 3 via the carbonate desulfurisation route was heat treated in the same way. XRD analysis showed that pure leady oxide was produced, the leady oxide containing both PbO and metallic Pb.

### Reference Example 5: recycling electric arc furnace dusts

Samples of steel industry dust were obtained. The samples had previously been subjected to a conventional zinc recovery treatment and contained approximately 60 to 70 % by weight of PbSO₄. The samples were subjected to desulfurisation using NaOH, followed by conversion into lead citrate and calcination.

Initial recycling experiments on the samples showed that desulfurisation and conversion into lead citrate proceeded slowly. Further analysis of the samples revealed the presence of C and SiO₂ in an amount of approximately 20 to 30 % by weight which was believed to be coating the particles in the sample.

Samples of the as-received material were pre-heated to 500 and 600 °C to determine the optimum pre-treatment temperature required to eliminate carbon. The samples were heated at a rate of 5 °C per minute and the temperature held at either 500 or 600 °C for a period of 1 hour. Though the amount of carbon decreased in both samples, the sample treated at 600 °C showed a significantly greater decrease of carbon than the sample treated at 500 °C.

The pre-treated samples were desulfurised using NaOH, converted into lead citrate and then calcined in air at 450 °C to give leady oxide. The leady oxide products contained PbO and metallic Pb, with the highest purity product obtained from the sample that was pre-treated at 600 °C.

## Claims

1. A method for recycling lead-containing waste, said method comprising:
(a) dissolving the lead-containing waste in an aqueous solution of a first acid to form a solution of a first lead salt;
(b) adding a second acid to the solution of the first lead salt to form a lead-depleted solution and a precipitate of a second lead salt, wherein the second acid is citric acid and is added to the solution of the first lead salt in an amount of up to 0.67 moles of citric acid per mole of lead ions; and
(c) converting the precipitate of the second lead salt into leady oxide,
wherein the first lead salt has a higher solubility in water than the second lead salt, and wherein an acidic environment is present throughout dissolution step (a).

2. The method of Claim 1, wherein:
the lead-containing waste comprises at least one of Pb, PbO and PbCO₃, preferably at least one of PbO and PbCO₃, and more preferably Pb in combination with at least one of PbO and PbCO₃; and/or
the lead-containing waste is derived from lead-acid battery paste or from electric arc furnace dusts.

3. The method of Claim 1 or Claim 2, wherein:
the first lead salt has a solubility in water of at least 100 g/L, preferably at least 200 g/L, and more preferably at least 300 g/L;
the second lead salt has a lower solubility in water than the first lead salt by at least 100 g/L, preferably by at least 200 g/L, and more preferably by at least 400 g/L; and/or the second lead salt has a solubility in water of up to 10 g/L, preferably up to 1 g/L, and more preferably up to 0.1 g/L.

4. The method of any of Claims 1 to 3, wherein the first acid is an organic acid, and preferably is acetic acid.

5. The method of any of Claims 1 to 4, wherein lead-containing waste is dissolved in the aqueous solution of the first acid:
having a molarity of from 0.1 to 7 mol/L, preferably from 0.25 to 3 mol/L, and more preferably from 0.5 to 1.5 mol/L;
in an amount of from 10 to 650 g, preferably from 50 to 300 g, and more preferably from 80 to 150 g of waste per litre of aqueous solution of the first acid;
at a temperature of from 0 to 90 °C, preferably from 10 to 50 °C, and more preferably from 15 to 30 °C;
at ambient pressure;
for a time period of from 1 to 120 minutes, preferably from 5 to 60 minutes, and more preferably from 15 to 45 minutes; and/or
under agitation.

6. The method of any of Claims 1 to 5, wherein the lead-containing waste is contacted with a redox reagent, such as hydrogen peroxide, metal hydrides, hydrogen gas, inorganic salts or organic redox reagents, and preferably hydrogen peroxide.

7. The method of any of Claims 1 to 6, wherein the lead-containing waste comprises material which is insoluble in the aqueous solution of the first acid and the method further comprises recovering said insoluble material from the solution of the first lead salt, *e.g*. by filtration, and wherein the insoluble material preferably comprises one or more of metal compounds such as barium sulfate; carbon such as carbon black, graphene and/or carbon nanotubes; and fibres such as lignosulfonates.

8. The method of any of Claims 1 to 7, wherein the second acid is added to the solution of the first lead salt:
in an amount of from 60 to 100%, preferably from 75 to 98 %, and more preferably from 80 to 95 % of the stoichiometric amount required for the formation of the second lead salt;
at a temperature of from -10 to 80 °C, preferably from 0 to 40 °C, and more preferably from 5 to 30 °C;
at ambient pressure;
for a time period of from 2 to 120 minutes, preferably from 5 to 60 minutes, and more preferably from 10 to 45 minutes; and/or
under agitation.

9. The method of any of Claims 1 to 8, wherein the precipitate of the second lead salt is separated from the lead-depleted solution, *e.g*. by filtration, and wherein the lead-depleted solution is preferably recycled and used as the aqueous solution of the first acid in step (a).

10. The method of any of Claims 1 to 9, wherein the lead-depleted solution comprises residual lead, preferably in the form of the dissolved first lead salt.

11. The method of any of Claims 1 to 10, wherein the precipitate of the second lead salt is converted into leady oxide by calcination, and wherein calcination preferably takes place:
at a temperature of from 250 to 1000 °C, preferably from 300 to 600 °C, and more preferably from 325 to 450 °C;
at a partial pressure of oxygen of from 0.01 to 5 atm, preferably from 0.05 to 1 atm, and more preferably from 0.1 to 0.5 atm; and/or
for a time period of from 10 minutes to 6 hours, preferably from 20 minutes to 2 hours, and more preferably from 30 minutes to 1 hour.

12. The method of any of Claims 1 to 11, wherein:
the leady oxide comprises PbO and Pb in a total amount of at least 99 %, preferably at least 99.5 %, and more preferably at least 99.9 % by weight; and/or
the method further comprises processing the leady oxide into battery plates, and optionally incorporating said battery plates into a lead-acid battery.

13. The method of any of Claims 1 to 12, wherein the lead-containing waste that is used in step (a) is substantially free from PbSO₄.

14. The method of any of Claims 1 to 12, wherein the lead-containing waste comprises PbSO₄, and the method further comprises a pre-treatment step in which the lead-containing waste is desulfurised before it is used in step (a), wherein the pre-treatment step preferably comprises contacting the lead-containing waste with:
a base, such as an alkali metal hydroxide, *e.g*. NaOH, KOH or LiOH, preferably in an amount of from 1.5 to 3 moles, preferably from 1.75 to 2.5 moles, and more preferably from 2 to 2.25 moles of base per mole of lead sulfate in the lead-containing waste; or
a carbonate, such as an alkali metal carbonate, *e.g*. Na₂CO₃, K₂CO₃ or Li₂CO₃, preferably in an amount of from 0.75 to 1.5 moles, preferably from 0.85 to 1.25 moles, and more preferably from 1 to 1.1 moles per mole of lead sulfate in the lead-containing waste.

15. The method of Claim 14, wherein the method comprises monitoring the pre-treatment step until the content of PbSO₄ in the lead-containing waste is reduced to a target level, *e.g*. a target level of up to 500 ppm by weight, preferably up to 300 ppm by weight, and more preferably up to 100 ppm by weight, wherein the monitoring of the pre-treatment step is preferably carried out indirectly by monitoring a parameter which correlates with the amount of PbSO₄ in the lead-containing waste.

## Patentansprüche

1. Ein Verfahren zum Recyceln bleihaltiger Abfälle, wobei das genannte Verfahren Folgendes umfasst:
a) Auflösen der bleihaltigen Abfälle in einer wässrigen Lösung einer ersten Säure, um eine Lösung eines ersten Bleisalzes zu bilden;
b) Zugeben einer zweiten Säure zu der Lösung des ersten Bleisalzes, um eine bleiarme Lösung und ein Präzipitat eines zweiten Bleisalzes zu bilden, wobei die zweite Säure Citronensäure ist und der Lösung des ersten Bleisalzes in einer Menge von bis zu 0,67 mol Citronensäure pro mol Bleiionen zugegeben wird; und
c) Umwandeln des Präzipitats des zweiten Bleisalzes in bleiernes Oxid,
wobei das erste Bleisalz eine höhere Wasserlöslichkeit aufweist als das zweite Bleisalz und wobei ein während des gesamten Schritt des Auflösens (a) ein saures Milieu vorhanden ist.

2. Verfahren nach Anspruch 1, wobei:
die bleihaltigen Abfälle mindestens eines von Pb, PbO und PbCO₃, bevorzugt mindestens eines von PbO und PbCO₃, und bevorzugter Pb in Kombination mit mindestens einem von PbO und PbCO₃ umfassen; und/oder
die bleihaltigen Abfälle aus Bleibatteriepaste oder aus elektrischen Lichtbogenofenstäuben stammen.

3. Verfahren nach Anspruch 1 oder Anspruch 2, wobei:
das erste Bleisalz eine Wasserlöslichkeit von mindestens 100 g/l, bevorzugt mindestens 200 g/l und bevorzugter mindestens 300 g/l aufweist;
das zweite Bleisalz eine um mindestens 100 g/l, bevorzugt um mindestens 200 g/l und bevorzugter um mindestens 400 g/l geringere Wasserlöslichkeit als das erste Bleisalz aufweist; und/oder
das zweite Bleisalz eine Wasserlöslichkeit von bis zu 10 g/l, bevorzugt bis zu 1 g/l und bevorzugter bis zu 0,1 g/l aufweist.

4. Verfahren nach einem der Ansprüche 1 bis 3, wobei die erste Säure eine organische Säure ist und bevorzugt Essigsäure ist.

5. Verfahren nach einem der Ansprüche 1 bis 4, wobei bleihaltige Abfälle in der wässrigen Lösung der ersten Säure aufgelöst werden:
mit einer Molarität von 0,1 bis 7 mol/l, bevorzugt von 0,25 bis 3 mol/l und bevorzugter von 0,5 bis 1,5 mol/l;
in einer Menge von 10 bis 650 g, bevorzugt von 50 bis 300 g und bevorzugter von 80 bis 150 g Abfälle pro Liter der wässrigen Lösung der ersten Säure;
bei einer Temperatur von 0 bis 90 °C, bevorzugt von 10 bis 50 °C und bevorzugter von 15 bis 30 °C;
bei Umgebungsdruck;
für einen Zeitraum von 1 bis 120 Minuten, bevorzugt von 5 bis 60 Minuten und bevorzugter von 15 bis 45 Minuten; und/oder
unter Rühren.

6. Verfahren nach einem der Ansprüche 1 bis 5, wobei die bleihaltigen Abfälle mit einem Redoxreagens, wie etwa Wasserstoffperoxid, Metallhydriden, Wasserstoffgas, anorganischen Salzen oder organischen Redoxreagenzien und bevorzugt Wasserstoffperoxid in Kontakt gebracht werden.

7. Verfahren nach einem der Ansprüche 1 bis 6, wobei die bleihaltigen Abfälle Material umfassen, das nicht in der wässrigen Lösung der ersten Säure löslich ist, und wobei das Verfahren ferner das Zurückgewinnen des genannten unlöslichen Materials aus der Lösung des ersten Bleisalzes, z. B. mittels Filtration, umfasst und wobei das unlösliche Material bevorzugt eines oder mehrere von Folgenden umfasst: Metallverbindungen wie etwa Bariumsulfat; Kohlenstoff wie etwa Carbon-Black, Graphen und/oder Kohlenstoffnanoröhrchen; und Fasern wie etwa Lignosulfonate.

8. Verfahren nach einem der Ansprüche 1 bis 7, wobei die zweite Säure der Lösung des ersten Bleisalzes zugegeben wird:
in einer Menge von 60 bis 100%, bevorzugt von 75 bis 98 % und bevorzugter von 80 bis 95 % der stöchiometrischen Menge, die zur Bildung des zweiten Bleisalzes erforderlich ist;
bei einer Temperatur von -10 bis 80 °C, bevorzugt von 0 bis 40 °C und bevorzugter von 5 bis 30 °C;
bei Umgebungsdruck;
für einen Zeitraum von 2 bis 120 Minuten, bevorzugt von 5 bis 60 Minuten und bevorzugter von 10 bis 45 Minuten; und/oder
unter Rühren.

9. Verfahren nach einem der Ansprüche 1 bis 8, wobei das Präzipitat des zweiten Bleisalzes, z. B. mittels Filtration, von der bleiarmen Lösung getrennt wird und wobei die bleiarme Lösung bevorzugt recycelt wird und als die wässrige Lösung der ersten Säure in Schritt (a) verwendet wird.

10. Verfahren nach einem der Ansprüche 1 bis 9, wobei die bleiarme Lösung Restblei, bevorzugt in Form des aufgelösten ersten Bleisalzes, umfasst.

11. Verfahren nach einem der Ansprüche 1 bis 10, wobei das Präzipitat des zweiten Bleisalzes mittels Kalzinierung in bleiernes Oxid umgewandelt wird und wobei die Kalzinierung bevorzugt stattfindet:
bei einer Temperatur von 250 bis 1000 °C, bevorzugt von 300 bis 600 °C und bevorzugter von 325 bis 450 °C;
bei einem Sauerstoffteildruck von 0,01 bis 5 atm, bevorzugt von 0,05 bis 1 atm und bevorzugter von 0,1 bis 0,5 atm; und/oder
für einen Zeitraum von 10 Minuten bis 6 Stunden, bevorzugt von 20 Minuten bis 2 Stunden und bevorzugter von 30 Minuten bis 1 Stunde.

12. Verfahren nach einem der Ansprüche 1 bis 11, wobei:
das bleierne Oxid PbO und Pb in einer Gesamtmenge von mindestens 99, bevorzugt mindestens 99,5 und bevorzugter mindestens 99,9 Gewichts-% umfasst; und/oder
das Verfahren ferner das Verarbeiten des bleiernen Oxids zu Batterieplatten und optional das Einbauen der genannten Batterieplatten in eine Bleibatterie umfasst.

13. Verfahren nach einem der Ansprüche 1 bis 12, wobei die in Schritt (a) verwendeten bleihaltigen Abfälle im Wesentlichen frei von PbSO₄ sind.

14. Verfahren nach einem der Ansprüche 1 bis 12, wobei die bleihaltigen Abfälle PbSO₄ umfassen und das Verfahren ferner einen Vorbehandlungsschritt umfasst, in dem die bleihaltigen Abfälle entschwefelt werden, bevor sie in Schritt (a) verwendet werden, wobei der Vorbehandlungsschritt bevorzugt das In-Kontakt-Bringen der bleihaltigen Abfälle mit Folgendem umfasst:
einer Base, wie etwa einem Alkalimetallhydroxid, z. B. NaOH, KOH oder LiOH, bevorzugt in einer Menge von 1,5 bis 3 mol, bevorzugt von 1,75 bis 2,5 mol und bevorzugter von 2 bis 2,25 mol Base pro mol Bleisulfat in den bleihaltigen Abfällen; oder
einem Carbonat, wie etwa einem Alkalimetallcarbonat, z. B. Na₂CO₃, K₂CO₃ oder Li₂CO₃, bevorzugt in einer Menge von 0,75 bis 1,5 mol, bevorzugt von 0,85 bis 1,25 mol und bevorzugter von 1 bis 1,1 mol pro mol Bleisulfat in den bleihaltigen Abfällen.

15. Verfahren nach Anspruch 14, wobei das Verfahren das Überwachen des Vorbehandlungsschritts umfasst, bis der Gehalt an PbSO₄ in den bleihaltigen Abfällen bis auf ein Zielniveau reduziert ist, z. B. auf ein Zielniveau von bis zu 500 Gewichts-ppm, bevorzugt bis zu 300 Gewichts-ppm und bevorzugter bis zu 100 Gewichts-ppm, wobei das Überwachen des Vorbehandlungsschritts bevorzugt indirekt ausgeführt wird, indem ein mit der Menge von PbSO₄ korrelierender Parameter in den bleihaltigen Abfällen überwacht wird.

## Revendications

1. Procédé de recyclage de déchets contenant du plomb, ledit procédé comprenant :
a) la dissolution des déchets contenant du plomb dans une solution aqueuse d'un premier acide pour former une solution d'un premier sel de plomb ;
b) l'ajout d'un deuxième acide à la solution du premier sel de plomb pour former une solution appauvrie en plomb et un précipité d'un deuxième sel de plomb, le deuxième acide étant l'acide citrique et étant ajouté à la solution du premier sel de plomb dans une quantité de jusqu'à 0,67 mole d'acide citrique par mole d'ions plomb ; et
c) la conversion du précipité du deuxième sel de plomb en oxyde riche en plomb,
dans lequel le premier sel de plomb a une solubilité dans l'eau plus élevée que le deuxième sel de plomb, et dans lequel un environnement acide est présent tout au long de l'étape de dissolution (a).

2. Procédé selon la revendication 1, dans lequel :
les déchets contenant du plomb comprennent au moins l'un du Pb, du PbO et du PbCO₃, de préférence au moins l'un du PbO et du PbCO₃, et plus préférablement du Pb en combinaison avec au moins l'un du PbO et du PbCO₃ ; et/ou
les déchets contenant du plomb sont dérivés de pâte de batteries au plomb-acide ou de poussières de fours électriques à arc.

3. Procédé selon la revendication 1 ou la revendication 2, dans lequel :
le premier sel de plomb a une solubilité dans l'eau d'au moins 100 g/L, de préférence d'au moins 200 g/L, et plus préférablement d'au moins 300 g/L ;
le deuxième sel de plomb a une solubilité dans l'eau inférieure à celle du premier sel de plomb d'au moins 100 g/L, de préférence d'au moins 200 g/L, et plus préférablement d'au moins 400 g/L ; et/ou
le deuxième sel de plomb a une solubilité dans l'eau de jusqu'à 10 g/L, de préférence de jusqu'à 1 g/L, et plus préférablement de jusqu'à 0,1 g/L.

4. Procédé selon l'une quelconque des revendications 1 à 3, dans lequel le premier acide est un acide organique, et de préférence est l'acide acétique.

5. Procédé selon l'une quelconque des revendications 1 à 4, dans lequel les déchets contenant du plomb sont dissous dans la solution aqueuse du premier acide :
ayant une molarité de 0,1 à 7 mol/L, de préférence de 0,25 à 3 mol/L, et plus préférablement de 0,5 à 1,5 mol/L ;
dans une quantité de 10 à 650 g, de préférence de 50 à 300 g, et plus préférablement de 80 à 150 g de déchets par litre de solution aqueuse du premier acide ;
à une température de 0 à 90 °C, de préférence de 10 à 50 °C, et plus préférablement de 15 à 30 °C ;
à la pression ambiante ;
pendant une période de temps de 1 à 120 minutes, de préférence de 5 à 60 minutes, et plus préférablement de 15 à 45 minutes ; et/ou
sous agitation.

6. Procédé selon l'une quelconque des revendications 1 à 5, dans lequel les déchets contenant du plomb sont mis en contact avec un réactif redox, tel que le peroxyde d'hydrogène, les hydrures métalliques, l'hydrogène gazeux, les sels inorganiques ou les réactifs redox organiques, et de préférence le peroxyde d'hydrogène.

7. Procédé selon l'une quelconque des revendications 1 à 6, dans lequel les déchets contenant du plomb comprennent un matériau qui est insoluble dans la solution aqueuse du premier acide, et le procédé comprenant en outre une récupération dudit matériau insoluble à partir de la solution du premier sel de plomb, par exemple par filtration, et dans lequel le matériau insoluble comprend de préférence un ou plusieurs de composés métalliques tels que le sulfate de baryum ; d'un carbone tel que le noir de carbone, le graphène et/ou les nanotubes de carbone ; et de fibres telles que les lignosulfonates.

8. Procédé selon l'une quelconque des revendications 1 à 7, dans lequel le deuxième acide est ajouté à la solution du premier sel de plomb :
dans une quantité de 60 à 100 %, de préférence de 75 à 98 %, et plus préférablement de 80 à 95 % de la quantité stœchiométrique nécessaire à la formation du deuxième sel de plomb ;
à une température de -10 à 80 °C, de préférence de 0 à 40 °C, et plus préférablement de 5 à 30 °C ;
à la pression ambiante ;
pendant une période de temps de 2 à 120 minutes, de préférence de 5 à 60 minutes, et plus préférablement de 10 à 45 minutes ; et/ou
sous agitation.

9. Procédé selon l'une quelconque des revendications 1 à 8, dans lequel le précipité du deuxième sel de plomb est séparé de la solution appauvrie en plomb, par exemple par filtration, et dans lequel la solution appauvrie en plomb est de préférence recyclée et utilisée comme la solution aqueuse du premier acide à l'étape (a).

10. Procédé selon l'une quelconque des revendications 1 à 9, dans lequel la solution appauvrie en plomb comprend du plomb résiduel, de préférence sous la forme du premier sel de plomb dissous.

11. Procédé selon l'une quelconque des revendications 1 à 10, dans lequel le précipité du deuxième sel de plomb est converti en oxyde riche en plomb par calcination, et dans lequel la calcination a lieu de préférence :
à une température de 250 à 1 000 °C, de préférence de 300 à 600 °C, et plus préférablement de 325 à 450 °C ;
à une pression partielle d'oxygène de 0,01 à 5 atm, de préférence de 0,05 à 1 atm, et plus préférablement de 0,1 à 0,5 atm ; et/ou
pendant une période de temps de 10 minutes à 6 heures, de préférence de 20 minutes à 2 heures, et plus préférablement de 30 minutes à 1 heure.

12. Procédé selon l'une quelconque des revendications 1 à 11, dans lequel :
l'oxyde riche en plomb comprend du PbO et du Pb dans une quantité totale d'au moins 99 %, de préférence d'au moins 99,5 %, et plus préférablement d'au moins 99,9 % en poids ; et/ou
le procédé comprend en outre une transformation de l'oxyde riche en plomb en plaques de batterie, et optionnellement l'incorporation desdites plaques de batterie dans une batterie au plomb-acide.

13. Procédé selon l'une quelconque des revendications 1 à 12, dans lequel les déchets contenant du plomb qui sont utilisés à l'étape (a) sont sensiblement exempts de PbSO₄.

14. Procédé selon l'une quelconque des revendications 1 à 12, dans lequel les déchets contenant du plomb comprennent du PbSO₄, et le procédé comprenant en outre une étape de prétraitement durant laquelle les déchets contenant du plomb sont désulfurés avant d'être utilisés à l'étape (a), l'étape de prétraitement comprenant de préférence une mise en contact des déchets contenant du plomb avec :
une base, telle qu'un hydroxyde de métal alcalin, par exemple du NaOH, du KOH ou du LiOH, de préférence dans une quantité de 1,5 à 3 moles, de préférence de 1,75 à 2,5 moles, et plus préférablement de 2 à 2,25 moles de base par mole de sulfate de plomb dans les déchets contenant du plomb ; ou
un carbonate, tel qu'un carbonate de métal alcalin, par exemple du Na₂CO₃, du K₂CO₃ ou du Li₂CO₃, de préférence dans une quantité de 0,75 à 1,5 mole, de préférence de 0,85 à 1,25 mole, et plus préférablement de 1 à 1,1 mole par mole de sulfate de plomb dans les déchets contenant du plomb.

15. Procédé selon la revendication 14, le procédé comprenant une surveillance de l'étape de pré-traitement jusqu'à ce que la teneur en PbSO₄ des déchets contenant du plomb soit réduite à un niveau cible, par exemple un niveau cible de jusqu'à 500 ppm en poids, de préférence de jusqu'à 300 ppm en poids, et plus préférablement de jusqu'à 100 ppm en poids, la surveillance de l'étape de pré-traitement étant de préférence réalisée indirectement en surveillant un paramètre qui est en corrélation avec la quantité de PbSO₄ dans les déchets contenant du plomb.
